# EUROPÄISCHE PATENTSCHRIFT

(11) **EP 2 509 759 B1**
(45) Veröffentlichungstag und Bekanntmachung des Hinweises auf die Patenterteilung: **17.05.2017**
(21) Anmeldenummer: 10790422.9
(22) Anmeldetag: 09.12.2010
(51) Int. Cl.: B29B 11/16

(54) **HALBZEUG UND VERFAHREN ZUR HERSTELLUNG EINES HALBZEUGS FÜR EIN FASERVERBUNDBAUTEIL**
INTERMEDIATE PRODUCT AND METHOD FOR PRODUCING AN INTERMEDIATE PRODUCT FOR A FIBER COMPOSITE COMPONENT
SEMI-PRODUIT ET PROCÉDÉ DE FABRICATION D'UN SEMI-PRODUIT POUR UN ÉLÉMENT COMPOSITE RENFORCÉ PAR DES FIBRES

(30) Priorität: 09.12.2009 DE 102009044834
(43) Veröffentlichungstag der Anmeldung: 17.10.2012
(73) Patentinhaber: SAERTEX GmbH & Co. KG, 48369 Saerbeck (DE)
(72) Erfinder: ROTH, Ekkehard, 21423 Winsen (DE)
(74) Vertreter: Werner & ten Brink
(86) Internationale Anmeldenummer: PCT/EP2010/069291
(87) Internationale Veröffentlichungsnummer: WO 2011/070118

(56) Entgegenhaltungen:
- WO-A1-99/44810
- US-A- 6 096 669
- US-A1- 2004 051 212

## Beschreibung

Die vorliegende Erfindung betrifft ein Verfahren zur Herstellung eines textilen Halbzeugs für einen Vorformling. Ferner betrifft die Erfindung ein textiles Halbzeug zur Herstellung eines Vorformlings für ein Faserverbundbauteil.

Bei der Herstellung von Faserverbundbauteilen werden vor allem zwei verschiedene Ansätze verfolgt. Einerseits werden mit Harz vorimprägnierte Faserhalbzeuge (auch Composite oder Prepreg genannt) eingesetzt, die in Form gebracht und anschließend ausgehärtet. Andererseits werden Vorformlinge aus mit Bindemittel versehenen Faserschichten (auch Preform genannt), die auch schon vorläufig in Form gebracht werden können, und später im Rahmen von Verfahren wie etwa RTM(resin transfer moulding)-Verfahren, RIM(resin injection moulding)-Verfahren oder anderen Vakuum- und/oder Druck-unterstützten Injektionsverfahren in einer Form in ein Matrixharz eingebettet, das anschließend ausgehärtet wird.

Die Vorformlinge haben den Vorteil nicht nur biegsam, sondern in gewissem Umfang auch scherbar zu sein, so dass sie sich auch in komplexere Formwerkzeuge einpassen lassen. Das Bindemittel hat als wichtige Funktion, die Fasern des vorgeformten Formlings miteinander derart zu verbinden, dass der Vorformling eine für die weitere Handhabung notwendige Formstabilität aufweist.

Üblicherweise wird das Bindemittel in Pulverform in einem separaten Arbeitsschritt auf den Schichten aus Verstärkungsfasern aufgebracht, bei dem das Bindemittelpulver auf den Fasern angesintert oder angeschmolzen wird, damit es bei folgenden Transport- oder Weiterverarbeitungsschritten nicht herausrieselt. Durch diese Ausrüstung werden die textilen Halbzeuge allerdings in gewissem Maße eigensteif und verlieren ihren textilen weichen Charakter. Sie sind anschließend nur noch im erwärmten Zustand, also heiß umzuformen, um daraus einen Vorformling herzustellen.

Alternativ zum Pulverauftrag des Bindemittels ist es auch möglich, den Verstärkungsfasern Fasern aus Bindemittel beizufügen und/oder einzelne Faserschichten mit Fäden aus Bindemittel zu vernähen. In der Regel bestehen die Bindemittelfasern oder -fäden aus Bindemittel auf Thermoplastbasis wie etwa Polyestern, Polyamiden, Polyethersulfonen oder Mischungen davon. Nachteilig ist, dass derartige Bindemittelfasern bzw. -fäden einen hohen Schmelzpunkt haben und daher auf häufig über 200°C erwärmt werden müssen, um eine hinreichende Formstabilität der Vorformlinge zu gewährleisten. Außerdem sind diese Bindemittelfasern bzw. -fäden oft nur schlecht mit den Matrixharzsystemen bei der Weiterverarbeitung der Vorfomlinge zu Faserverbundwerkstoffen kompatibel.

Aus der EP 1 060 069 B1 und WO 99/44810 ist bekannt, zwischen Fasergelegeschichten von Gelegen Vliesstoff aus Bindemittel, beispielsweise aus Copolyester lose einzulegen. Die Fasergelegeschichten und die Vliesstoffschichten werden miteinander vernäht, um den Zusammenhalt und damit die Handhabbarkeit der Fasergelegeanordnung zu gewährleisten. Zur Herstellung eines Vorformlings aus dieser Fasergelegeanordnung wird sie auf Schmelz- bzw. Verarbeitungstemperatur des Bindemittelvliesstoffes erwärmt und in einem Pressformwerkzeug in eine vorgegebene dreidimensionale Formgestalt gepresst. Nach anschließendem Abkühlen wird der Vorformling entformt.

Die US 6,096,669 beschreibt ein Herstellungsverfahren für einen Vorformling, bei dem zwischen Schichten aus unidirektionalen Fasern eine netzförmige dünne Harzschicht mittels einer Walze aufgetragen wird. Die Faserschichten und die Harzschicht werden vorgewärmt und durch geheizte Walzen zusammengefügt, wobei die Harzschicht schmilzt.

Der vorliegenden Erfindung liegt die Aufgabe zugrunde, die bekannten Herstellungsverfahren für Vorformlinge für Faserverbundwerkstoffe zu verbessern.

Erfindungsgemäß wird die Aufgabe durch ein Verfahren zur Herstellung eines textilen Halbzeugs für einen Vorformling mit den Schritten gelöst:
- Bilden mindestens einer Faserverstärkungsschicht;
- Aufbringen von Bindemittel auf Basis langkettiger Reaktionsharze, die bei Raumtemperatur im festen Zustand vorliegen, durch Aufsprühen des Bindemittels als Gespinst auf mindestens eine Faserverstärkungsschicht.

Unter langkettigen Reaktionsharzen werden hier Feststoffharze ohne Härter verstanden, also ungehärtete Duroplaste, die daher noch thermoplastische Eigenschaften aufweisen, aber dennoch im erkalteten Zustand eine gewisse Sprödigkeit aufweisen. Unter Gespinst wird eine dreidimensionale Anordnung aus feinem Endlosfaden oder aus einer Mehrzahl von feinen Fäden und/oder Fadenfragmenten verstanden

Durch Aufsprühen von Bindemittel auf Basis langkettiger Reaktionsharze, die bei Raumtemperatur im festen Zustand vorliegen, als Gespinst wird die Faserverstärkungsschicht derart mit Bindemittel ausgerüstet, dass sie ihre textilen Verformungseigenschaften beibehält und ein Drapieren einer Form mit der ausgerüsteten Faserverstärkungsschicht bzw. ein Verformen der ausgerüsteten Faserverstärkungsschicht im kalten Zustand, d.h. ohne zusätzlichen Erwärmungsschritt vor dem Verformungsschritt erlaubt. Denn durch das Aufbringen durch Aufsprühen wird ermöglicht, dass das Bindemittel vor dem Auftreffen auf der Faserverstärkungsschicht bereits an der Umgebungsluft so weit abkühlt, dass es beim Auftreffen zumindest teilweise erstarrt ist und sich ein Gespinst ausbildet.

Die Aufbereitung des Bindemittels als Gespinst hat ferner den Vorteil, ein schnelles, effizientes und homogenes Tränken des Vorformlings mit Matrixharz bei der Weiterverarbeitung zum Faserverbundbauteil zu erlauben.

Bei den Faserverstärkungsschichten kann es sich um einzelne, ein Gelege bildende Lagen, Gelege, Gewebe, Gestricke, Vliese, Matten oder Geflechte oder Kombinationen davon handeln. Die ein Gelege bildenden Lagen werden auch Ply genannt und bilden insbesondere unidirektionale, bidirektionale, biaxiale oder multiaxiale Gelege. Komplexere Gelege können auch aus Schichtungen aus Lagen, aus unidirektionalen, bidirektionalen, biaxialen und/oder multiaxialen Gelegen, Geweben Gestricken, Vliesen, Matten, Geflechten oder deren Kombinationen aufgebaut sein. Die Faserverstärkungsschichten können beispielsweise Synthesefasern, Glasfasern, Kohlefasern, Basaltfasern, Aramidfasern, Naturfasern und/oder Hybridfasern oder deren Kombinationen miteinander aufweisen. Aramidfasern sind dabei besonders bevorzugte Synthesefasern. Unter Hybridfasern werden insbesondere Fasern aus Kombinationen der genannten Fasermaterialien verstanden.

Es sei darauf hingewiesen, dass besonders bevorzugt im jeweiligen Einzelfall Bindemittel ausgewählt werden, die mit dem Matrixharz kompatibel sind, die bei der Weiterverarbeitung der unterschiedlichen Vorformlinge zu Faserverbundbauteilen eingesetzt werden.

Das Aufbringen des Bindemittels in Gespinstform erlaubt, verglichen insbesondere mit dem Einbringen einer Bindemittelvlieslage, mit deutlich geringeren Flächengewichten des Bindemittels auszukommen und dennoch eine ähnliche Bindewirkung zu erreichen. Dies gilt insbesondere bei der Verwendung von Bindemittelgespinst auf Basis langkettiger Reaktionsharze, die bei Raumtemperatur im festen Zustand vorliegen, und ganz besonders bei der Verwendung von Bindemittelgespinst auf Duroplastbasis. Vorteilhafterweise wird das Bindemittelgespinst mit einem Flächengewicht im Bereich von 3 g/m² bis 10 g/m², bevorzugt von 5 g/m² bis 7 g/m² aufgesprüht.

Es hat sich als vorteilhaft herausgestellt, beim Aufsprühen den Abstand zur Faserverstärkungsschicht derart zu wählen, dass das Bindemittel beim Auftreffen auf der Faserverstärkungsschicht noch nicht vollständig erstarrt ist. Dort, wo eine noch weiche Bindemittelgespinstfaser in unmittelbaren Kontakt mit der darunter liegenden Faserverstärkungsschicht kommt, kann es zu einem Klebeeffekt kommen, der dazu führt, dass das Bindemittelgespinst in seiner Position auf der Faserverstärkungsschicht in zumindest geringem Umfang fixiert ist. Dieser Effekt kann durch die Verwendung von Bindemittel auf Basis langkettiger Reaktionsharze, die bei Raumtemperatur im festen Zustand vorliegen, insbesondere auf Duroplastbasis weiter erhöht werden, indem man die Sprödigkeitkeit des Bindemittelgespinstes und das dadurch häufige Verhaken von Gespinstfasern und -fragmenten nutzt, was ebenfalls ein Gleiten des Gespinstes als Ganzes relativ zur darunter liegenden Faserverstärkungsschicht vermindert. Dennoch werden aufgrund der speziellen Struktur eines Gespinstes, das beispielsweise mit der Struktur von Zuckerwatte verglichen werden kann, die Drapierbarkeit und Verformbarkeit der mit Bindemittelgespinst ausgerüsteteten Faserverstärkungsschicht auch beim Kaltumformen nicht merklich beeinträchtigt.

Bevorzugt wird ein Bindemittel mit Schmelzpunkt unter 125°C, besonders bevorzugt unter 100°C aufgesprüht. Vorteilhafterweise wird bei der Wahl des Bindemittels berücksichtigt, welches Matrixharz bei der Weiterverarbeitung zu einem Faserverbundbauteil verwendet werden soll. Ein niedrigeschmelzendes Bindemittel ist von Vorteil, da bei der Herstellung des Vorformlings bzw. bei der Ausrüstung von Faserverstärkungsschichten zusätzlich Energie eingespart werden kann, weil niedrigschmelzende Bindemittel nicht so stark erwärmt werden müssen, um aufgesprüht werden zu können.

Vorteilhafterweise wird das Bindemittelgespinst als unzusammenhängendes Muster wie etwa ein Punkt- oder Linienmuster auf die darunter liegende Faserverstärkungsschicht aufgesprüht. Denn es hat sich herausgestellt, dass bei Ausrüsten mit Bindemittel als Gespinst bereits eine hinreichende Fixierung der Form eines Vorformlings bzw. einer drapierten bzw. umgeformten mit Bindemittelgespinst ausgerüsteten Faserverstärkungsschicht erreicht wird, ohne dass das Bindemittelgespinst eine zusammenhängende Fläche bildet. Das Aufsprühen als unzusammenhängendes Muster erlaubt außerdem ohne größeren prozesstechnischen Aufwand lokale Variationen der Bindemittelmenge, die an die benötigte lokale Bindewirkung beim jeweiligen Vorformling angepasst werden kann. Dabei können lokal größere zusammenhängende Flächen des Bindemittelgespinstes vorkommen.

In besonders bevorzugten Ausführungsformen wird nach dem Aufbringen von Bindemittel darüber eine zweite Faserverstärkungsschicht angeordnet. Optional kann auch diese zweite Faserverstärkungsschicht mit einem Bindemittelgespinst ausgerüstet werden. Die Anzahl der Faserverstärkungsschichten und die Wahl, welche der Faserverstärkungsschichten mit einem Bindemittelgespinst ausgerüstet werden, orientieren sich vorteilhafterweise an den mechanischen Anforderungen an den jeweiligen Vorformling bzw. an das daraus herzustellende Faserverbundbauteil.

In einem weiteren Aspekt wird die Aufgabe durch ein Verfahren zur Herstellung eines Vorformlings für ein Faserverbundbauteil, mit den Schritten gelöst:
- Herstellen eines textilen Halbzeugs nach dem vorstehend beschriebenen Verfahren;
- Kaltumformen der mindestens einen mit Bindemittelgespinst versehenen Faserverstärkungsschicht;
- Erwärmen und anschließendes Abkühlen der umgeformten, mit Bindemittel versehenen Faserverstärkungsschicht.

Nach dem Kaltumformen wird lediglich zum Fixieren der umgeformten Faserverstärkungsschicht in der gewünschten Form noch ein Wärmeeintrag benötigt. Hierbei reicht aber ein Erwärmen aus, das unter Ausnutzung der thermoplastischen Eigenschaften der als Bindemittel verwendeten langkettigen Reaktionsharze zu einem Anschmelzen und damit Ankleben des Bindemittels an der Faserverstärkungsschicht führt. Ein vollständiges Durchschmelzen des Bindemittels ist nicht erforderlich. Dies führt nicht nur zu einer Vereinfachung, sondern insgesamt zu einer signifikanten Energieeinsparung und Kostenersparnis bei der Herstellung von Vorformlingen für die Weiterverarbeitung zu Faserverbundbauteilen.

Ein weiterer Vorteil besteht darin, dass das Bindemittelgespinst spröde ist und bei der Weiterverarbeitung bzw. bei der Handhabung und/der dem Transport vor dem weiteren Schritt des Umformens teilweise kleinere Fragmente des Bindemittelgespinstes abbrechen und in die Faserverstärkungsschicht eindringen. Somit verteilt sich das Bindemittel auch in der Faserverstärkungsschicht, was ein effizienteres Fixieren der Form des Vorformlings durch Wärmeeintrag nach dem Kaltumformen der ausgerüsteten Faserverstärkungsschicht erlaubt. Da die Gefahr des Verlusts an Bindemittel geringer als beim Aufstreuen von Bindemittel als Pulver ist, ist ein zusätzliches Fixieren des Bindemittels beispielsweise durch Ansintern entbehrlich, was prozesstechnisch von Vorteil ist.

Vorteilhafterweise wird bei der Herstellung eines Vorformlings das Erwärmen der umgeformten Faserverstärkungsschicht(en) mittels Heißluft und/oder Infrarotstrahlung und/oder Mikrowellenstrahlung durchgeführt. Insbesondere das Erwärmen von Heißluft wird durch die sehr durchlässige Struktur eines Bindemittelgespinstes begünstigt und erlaubt bei verhältnismäßig geringem prozesstechnischen Aufwand ein effizientes und schnelles Erwärmen und Fixieren der umgeformten Faserverstärkungsschicht(en). Bevorzugt wird auch das Abkühlen des Vorformlings mittels Luft, nämlich Kaltluft durchgeführt. Dazu kann unter Umständen dieselbe Gebläseeinrichtung genutzt werden wie beim Erwärmen mit Heißluft. Insbesondere diese Varianten des Umformprozesses erlauben, auf einfache Weise Nachkorrekturen durchzuführen, z.B. bei der Lage des textilen Halbzeugs im Formwerkzeug.

Ferner wird die Aufgabe durch ein textiles Halbzeug zur Herstellung eines Vorformlings für ein Faserverbundbauteil, das auf mindestens einer Faserverstärkungsschicht ein Bindemittelgespinst auf Basis langkettiger Reaktionsharze, die bei Raumtemperatur im festen Zustand vorliegen, aufweist, gelöst, bei dem das Bindemittel als Gespinst auf die mindestens eine Faserverstärkungsschicht aufgesprüht ist. Das textile Halbzeug entspricht der mit Bindemittelgespinst ausgerüsteten einen oder mehreren Faserverstärkungsschicht(en), wie sie in den ersten Schritten des zuvor beschriebenen Verfahren zur Herstellung eines Vorformlings für ein Faserverbundbauteil als Zwischenprodukt hergestellt wird.

Dabei ist das Bindemittelgespinst auf Basis langkettiger Reaktionsharze, die bei Raumtemperatur im festen Zustand vorliegen, insbesondere auf der Basis ungehärteter Duroplaste. Dies führt zu einer Verteilung des Bindemittels durch teilweises Zerbröseln auch innerhalb der Faserverbundschicht(en). Das zusätzliche Verhakeln einzelner Gespinstfasern oder -fragmente mit den Fasernverbundschicht(en) erhöht weiter die Bindewirkung bei der späteren Fixierung der Form eines Vorformlings. Dabei erlaubt die Gespinststruktur des Bindemittels eine gute Drapierfähigkeit des textilen Halbzeuges auch im Kaltzustand.

Vorzugsweise weist das textile Halbzeug ein Bindemittelgespinst mit einem Flächengewicht im Bereich von 3 g/m² bis 10 g/m², bevorzugt von 5 g/m² bis 7 g/m² auf, das durch die spezielle Struktur des Bindemittels als Gespinst ermöglicht wird. Beispielsweise sind bisher Bindemittelvlieslagen mit derart geringem Flächengewicht nur mit schwer und bei sehr hohen Kosten erhältlich, wohingegen mit dem zuvor beschriebenen Verfahren derartige Flächengewichte für Bindemittel problemlos und kostengünstig erreicht werden können.

Vorteilhafterweise ist das Bindemittelgespinst in einem unzusammenhängenden Muster, wie etwa einem Punkt- oder Linienmuster aufgetragen. Dies trägt zu einem über die gesamte Fläche des textilen Halbzeugs geringen Flächengewicht bei, erlaubt aber gleichzeitig eine lokal höheres Flächengewicht an Stellen, an denen für die spätere Form des Vorformlings eine besonders hohe Bindewirkung erwünscht ist. Dies kann beispielsweise im Randzonenbereich der Fall sein.

Ein Ausführungsbeispiel der Erfindung wird nachfolgend anhand der Zeichnung erläutert. Die Zeichnung zeigt dabei in
- Figur 1: ein Flussdiagramm zum Ablauf einer Ausführungsform des Verfahrens zur Herstellung eines Vorformlings;
- Figur 2: schematisch eine erste Variante der Arbeitsschritte zur Herstellung eines textilen Halbzeugs als Vorstufe zum Vorformling;
- Figuren 3a,b: schematisch eine Detailansicht der Struktur des Bindemittelgespinstes in Draufsicht und im Schnitt;
- Figuren 4a,b: schematisch eine zweite Variante der Arbeitsschritte zur Herstellung eines textilen Halbzeugs als Vorstufe zum Vorformling;
- Figuren 5a,b: schematisch Möglichkeiten der Anordnung des Bindemittelgespinstes auf einer darunter liegenden Faserschicht; und
- Figur 6: schematisch eine dritte Variante der Arbeitsschritte zur Herstellung eines textilen Halbzeugs als Vorstufe zum Vorformling.

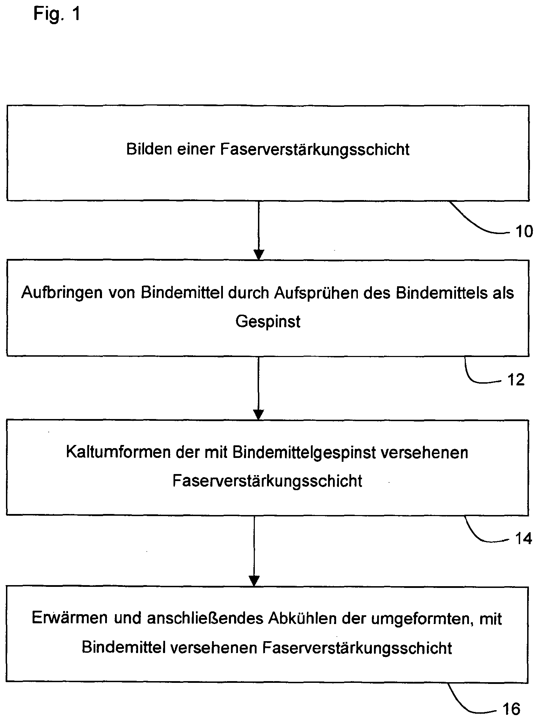

In Figur 1 ist der Ablauf einer Ausführungsform des Verfahrens zur Herstellung eines Vorformlings für ein Faserverbundbauteil dargestellt. Sowohl in Figur 1 als auch anhand der folgenden Figuren soll die Erfindung exemplarisch anhand von einer Faserverstärkungsstruktur erläutert werden, die zwei Faserverstärkungsschichten aufweist, zwischen denen ein Bindemittelgespinst angeordnet ist. Dabei sind im vorliegenden Beispiel die beiden Faserverstärkungsschichten als Gelegelagen ausgebildet, die gemeinsam ein bidirektionales Gelege bilden. Es sei aber darauf hingewiesen, dass die mindestens eine Faserverstärkungsschicht als ein Gelege bildende Lagen, Gelege, Gewebe, Gewirke, Gestrick, Vlies, Matte oder Geflechte oder einer Kombination davon ausgebildet sein kann. Die Gelege können insbesondere unidirektional, biaxial, bidirektional oder multiaxial sein. Die Anzahl und die Wahl der Ausführung der Faserverstärkungsschicht wird dabei primär von der Art und Form des aus dem Vorformling herzustellenden Faserverbundbauteil und den an dieses gestellten mechanischen Anforderungen bestimmt. So können auch drei, vier, fünf, sechs oder mehr Faserverstärkungsschichten verschiedener Art übereinander angeordnet werden, wobei es von der konkreten Form des Vorformlings und den sich dadurch ergebenden Anforderungen an die lokale Bindungswirkung des Bindemittelgespinstes abhängt, welche und wie viele Faserverstärkungsschichten mit Bindemittelgespinst ausgerüstet sind. In einer bevorzugten Variante sind bis auf die zuoberst liegende Faserverstärkungsschicht alle Faserverstärkungsschichten mit Bindemittelgespinst ausgerüstet. Auf lokal variierende Anforderungen an die Bindungswirkung kann durch Variation der Dichte des Bindemittelgespinstes reagiert werden. Bei mehr als zwei Faserverstärkungsschichten ist vorteilhafterweise zwischen mindestens zwei Faserverstärkungsschichten Bindemittelgespinst vorgesehen.

Im vorliegenden Beispiel sind die Faserverstärkungsschichten aus Glasfasern, sie können aber auch aus Kohlenstofffasern, Synthesefasern, Naturfasern, Hybridfasern oder Kombinationen davon sein. Bei der Wahl der Faserart wird vorteilhafterweise berücksichtigt, welches Matrixharz bei der Weiterverarbeitung zu einem Faserverbundbauteil eingesetzt werden wird.

Zur Herstellung eines Vorformlings für ein Faserverbundbauteil wird zunächst eine Faserverstärkungsschicht gebildet (Schritt 10 in Figur 1). Anschließend wird Bindemittel durch Aufsprühen als Gespinst auf die Faserverstärkungsschicht aufgebracht (Schritt 12). Bei dem Bindemittel handelt es sich bevorzugt um ein Bindemittel auf nicht gehärteter Duroplastbasis. Als besonders geeignet haben sich länger molekülkettige Harze herausgestellt, die bei Raumtemperatur fest sind und auch Hotmelts genannt werden, wobei durch das Aufbringen durch Aufsprühen in Gespinstform ein flächiges Migrieren in die darunter liegende Faserverstärkungsschicht vermieden wird und dadurch eine gute Kaltumformbarkeit ermöglicht wird. Bevorzugt handelt es sich dabei um Epoxidharzsysteme ohne Härter. Es können beispielsweise auch Polyester- oder Phenolharzsysteme eingesetzt werden. Vorteilhafterweise wird bei der Wahl des Bindemittelmaterials berücksichtigt, welches Matrixharz bei der Weiterverarbeitung zu einem Faserverbundbauteil eingesetzt werden wird. Besonders vorteilhaft ist es, Harze zu verwenden, die auf den gleichen Monomeren basieren wie das spätere Matrixharz, wobei allerdings die Polymere kürzerkettig sind als bei dem späteren Matrixharz. Im vorliegenden Beispiel wird ein Bindemittel auf der Basis von Bisphenol-A-Harzen, z.B. das Fabrikat "Shell 1004" der Firma Shell als Gespinst aufgesprüht. Es hat eine Schmelztemperatur von 90°C, so dass es gut auch mit Fasern mit geringer Hitzebeständigkeit kombiniert werden könnte. Neben den Bisphenolen werden auch Novolake besonders bevorzugt als Bindemittel eingesetzt, wobei alle vorgeschlagenen Festharzsysteme ohne Härter eingesetzt werden.

Um das Bindemittel als Gespinst aufzusprühen, kann es beispielsweise in einem Vorratsbehälter einer Sprüheinrichtung bereits flüssig vorliegen oder zwischen Vorratsbehälter und Düse etwa durch Erwärmen verflüssigt werden. Beim Austritt aus der Düse erkaltet das Bindemittelmaterial und trifft im teilweise oder ganz erstarrten Zustand auf der Faserverstärkungsschicht auf. Für den Austritt aus der Düse wird bevorzugt soviel Druck aufgebaut, dass es zu einer Verwirbelung des austretenden Bindemittelmaterialstrahls kommt. Das Bindemittel wird dadurch als feines Fadengespinst, ähnlich Zuckerwatte, oder als Gewölle aus feinen endlosen Fäden auf der Faserverstärkungsschicht abgelegt. Durch die Düsenform und -größe und deren Abstand zur Faserverstärkungsschicht sowie durch den Druck und die daraus resultierenden Verwirbelung kann auf die Struktur und die Dichte des Gespinstes Einfluss genommen werden.

Produktionstechnisch ist es in Hinblick auf Aufwand und Kosten ein großer Vorteil, dass das Bindemittelgespinst sozusagen online durch den Sprühschritt in die Produktion der Faserverstärkung integriert werden kann.

Nach den beiden Verfahrensschritten Bilden einer Faserverstärkungsschicht (Schritt 10) und Aufsprühen eines Bindemittelgespinstes (Schritt 12) und optional nach Wiederholen von Schritt 10 und/oder Schritt 12 ist zunächst ein Zwischenprodukt hergestellt, das im Folgenden mit textilem Halbzeug bezeichnet werden soll und unmittelbar zu einem Vorformling weiterverarbeitet werden kann oder auch zwischengelagert und später, ggf. an anderer Stelle weiterverarbeitet werden kann. Die bisher beschriebenen Verfahrensschritte können kontinuierlich oder diskontinuierlich ausgeführt werden.

Die Weiterverarbeitung vom textilen Halbzeug zum Vorformling umfasst als wesentliche Schritte das Kaltumformen der mit Bindemittelgespinst versehenen Faserverstärkungsschicht (Schritt 14) sowie das Erwärmen und anschließende Abkühlen der umgeformten, mit Bindemittel versehenen Faserverstärkungsschicht (Schritt 16). Beim Kaltumformen wird das textile Halbzeug in eine Form eingelegt und dort derart drapiert, dass es diese Form annimmt. Ein großer produktionstechnischer Vorteil in Hinblick auf Aufwand, Energiebedarf und Kosten besteht darin, dass dies bei Raumtemperatur, ohne Aufwärmen des textilen Halbzeuges möglich ist. Denn die Ausrüstung mit Bindemittel in Gespinstform beeinträchtigt die textilen Eigenschaften der Faserverstärkungsschichten und damit ihre Umformbarkeit nur unwesentlich. Ein Erwärmen mit anschließendem Abkühlen ist nur noch zum Fixieren der Form notwendig. Dabei wird das Bindemittel aufgeschmolzen und wieder zum Erstarren gebracht, wobei die Faserverstärkungsschichten in der gewünschten Form gehalten werden. Unter Ausnutzung der durchlässigen Struktur der mit Bindemittelgespinst ausgerüsteten Faserverstärkungsschichten wird insbesondere das Erwärmen, aber auch das Abkühlen mittels entsprechend temperierter Luft durchgeführt. Dadurch wird ein besonderes rascher Temperaturwechsel ermöglicht. Nach erfolgtem Abkühlen kann der Vorformling entformt werden. Ggf. kann er noch durch Oberflächenbehandlungen, Vereinzelung oder andere Bearbeitungsschritte nachbehandelt werden. Er kann auch als solcher im Rahmen von Verfahren wie etwa RTM(resin transfer moulding)-Verfahren, RIM(resin injection moulding)-Verfahren oder anderen Vakuum- und/oder Druck-unterstützten Injektionsverfahren in einer Form in ein Matrixharz eingebettet werden, das anschließend ausgehärtet wird, um auf diese Weise Faserverbundbauteile herzustellen.

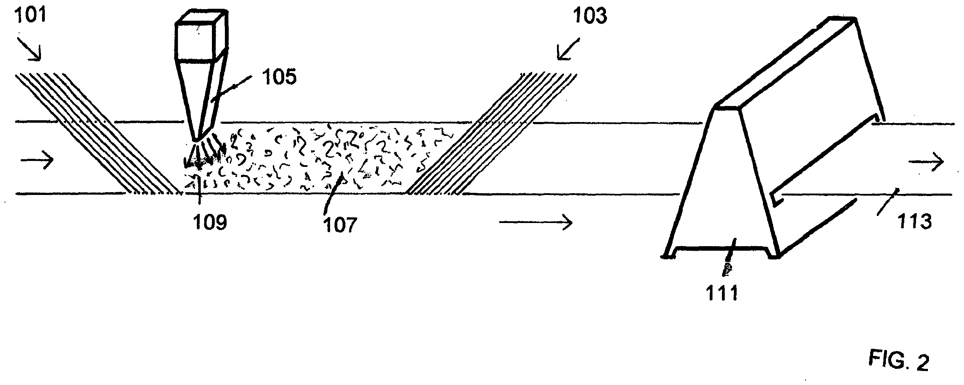

Figur 2 illustriert schematisch eine erste Variante der ersten Schritte der Herstellung eines Vorformlings, und zwar bis zur Herstellung des textilen Halbzeuges anhand des stellvertretenden Beispiels eines bidirektionalen Geleges aus zwei Glasfasergelegelagen mit dazwischen angeordnetem Bindemittelgespinst auf Bisphenol-A-Harz-Basis, das im vorliegenden Beispiel als bidiagonales Gelege ausgebildet ist. Dazu ist ein erster Eintrag 101 von Faserverstärkungsmaterial vorgesehen, der eine erste Glasfasergelegelage als Faserverstärkungsschicht bildet, wobei das Faserverstärkungsmaterial u.a. fadenförmig oder bahnenartig zugeführt werden kann. Auf dem Eintrag 101 wird unter Verwendung einer Sprüheinrichtung 105, aus der ein sich verwirbelnder Sprühstrahl 109 austritt, ein Bindemittelgespinst 107 gebildet. Darüber wird über einen zweiten Eintrag 103 eine zweite Glasfasergelegelage als Faserverstärkungsschicht gebildet. Beide Gelegelagen sind unter +45° bzw. -45° zur durch den Pfeil angedeuteten Bearbeitungsrichtung angeordnet und bilden zusammen ein bidiagonales Gelege. Die Warenbahn 113 aus textilem Halbzeug aus mit Bindemittelgespinst auf Bisphenol-A-Harz-Basis ausgerüstetem bediagonalen Gelege wird zur besseren Handhabbarkeit unter Verwendung der Näh- bzw. Nadeleinrichtung 111 genadelt bzw. genäht.

Das Nadeln wird insbesondere durchgeführt, um die beiden Gelegelagen gegeneinander gegen zu starkes Verrutschen zu sichern. Das Bindemittelgespinst auf ungehärteter Duroplastbasis verhakt an sich bereits durch seine Sprödigkeit mit der darunter liegenden Faserverstärkungsschicht. Durch Einstellen des Abstandes der Sprüheinrichtung 105 zur darunter liegenden Faserverstärkungsschicht kann der Erstarrungsgrad des Gespinstes beim Auftreffen verändert werden. Bevorzugt ist das Gespinst beim Auftreffen auf die Faserverstärkungsschicht noch nicht vollständig erstarrt, so dass sich an den Kontaktstellen eine Art Klebeeffekt oder eine Art Formschluss einstellt. Die Sprödigkeit des Bindemittelgespinstes auf Duroplastbasis führt auch zu einem teilweisen Zerbröseln, so dass sich Gespinstfragmente auch in der Faserverstärkungsschicht verteilen, was bei der Formfixierung bei der Weiterverarbeitung zum Vorformling zu einer besseren Bindewirkung führt. Dieses Zerbröseln und Verteilen der Fragmente in angrenzende Faserverstärkungsschichten wird durch das Nadeln gefördert.

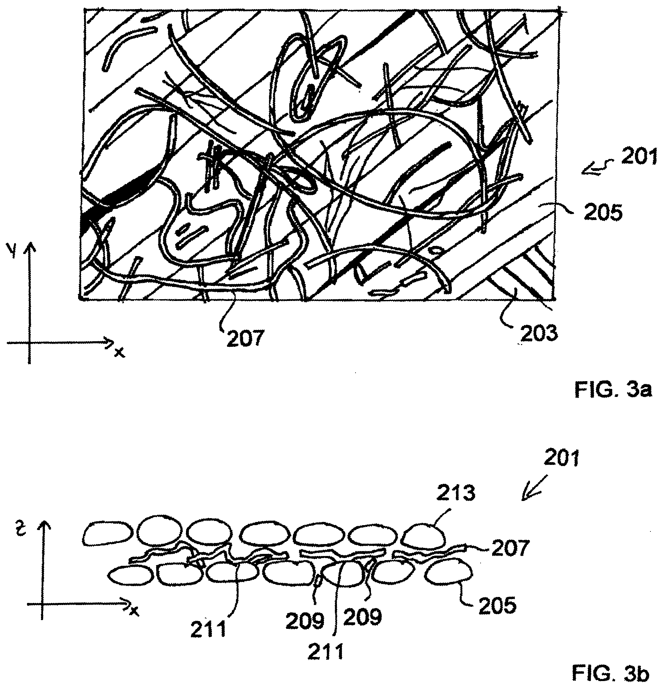

In den Figuren 3a,b wird in Draufsicht (Figur 3a) in der x-y-Ebene und im Schnitt (Figur 3b) in z-Richtung eines textilen Halbzeuges 201 schematisch die Struktur des Bindemittelgespinstes auf Duroplastbasis aus Fasern 207 auf bzw. zwischen Faserverstärkungsschichten 203, 205, 213. angedeutet. In Figur 3a wird von oben auf eine mit Fasern 207 eines Bindemittelgespinstes ausgerüstete Faserverstärkungsschicht 205 geschaut, unter der eine weitere, in eine andere Richtung orientierte Faserverstärkungsschicht 203 angeordnet ist. Die Gespinstfasern 207 haben unterschiedliche Längen und Krümmungen und erstrecken sich nicht nur in der x-y-Ebene, sondern auch senkrecht dazu in z-Richtung. Teilweise sind sie in kleinere Fragmente 209 zerbrochen, wie sie auch in der Schnittansicht in Figur 3b dargestellt sind, in der zwischen zwei Faserverstärkungsschichten 205, 213 ein Bindemittelgespinst angeordnet ist. Die Fragmente 209 können zwischen die Fasern der Faserverstärkungsschicht 205 rieseln. Durch ein Vernähen der Faserverstärkungsschichten 205, 213 miteinander können Fragmente auch in die darüber liegende Faserverstärkungsschicht 213 gezogen werden. Sind die Gespinstfasern 207 beim Auftreffen auf die Fasern der Faserverstärkungsschicht 205 noch nicht vollständig erstarrt, bilden sich Kontaktstellen 211 aus, an denen die Gespinstfasern 207 sich mit den Fasern der Faserverstärkungsschicht 205 verbinden. Wie tief die Gespinstfasern 207 in die angrenzenden Faserverstärkungsschichten 205 eindringen (im hier dargestellten Beispiel in z-Richtung), kann durch die Sprödigkeit des Bindemittelmaterials beeinflusst werden.

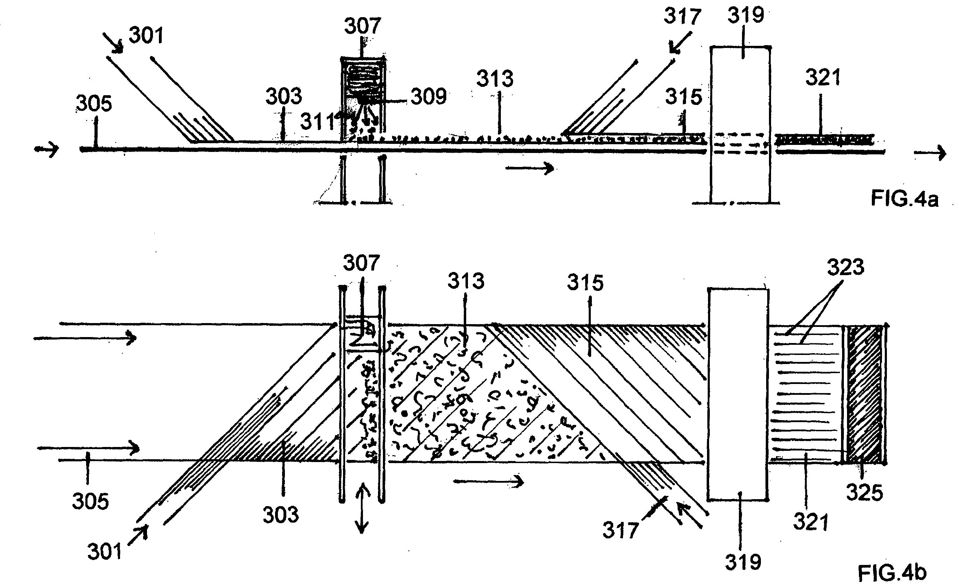

In den Figuren 4a,b ist von der Seite (Figur 4a) und von oben (Figur 4b) eine Variante des in Figur 2 dargestellten Aufbaus zu Herstellung eines textilen Halbzeuges dargestellt. Über einen ersten Fadeneintrag 301 auf ein sich in Pfeilrichtung bewegendes Förderband 305 wird eine erste Faserverstärkungsschicht 303 gebildet. Auf diese wird mittels einer Sprüheinrichtung 307 mit Düse 309, aus der sich ein sich verwirbelnder Sprühstrahl 311 bildet, ein Bindemittelgespinst 313 aufgetragen. Der Einsatz des Förderbandes 305 erlaubt eine hohe Genauigkeit bei der Ablage der ersten Faserverstärkungsschicht 303 und dem Auftrag des Bindemittelgespinstes 313. Über dem Bindemittelgespinst 313 wird über einen zweiten Fadeneintrag 317 eine zweite Faserverstärkungsschicht 315 gebildet. Die Faserverstärkungsschichten 303, 315 mit dazwischen liegendem Bindemittelgespinst 313 werden in der Näheinrichtung 319 mit Nähten 323 versehen und das so hergestellte textile Halbzeug 321 wird für den weiteren Transport auf eine Rolle 325 aufgerollt.

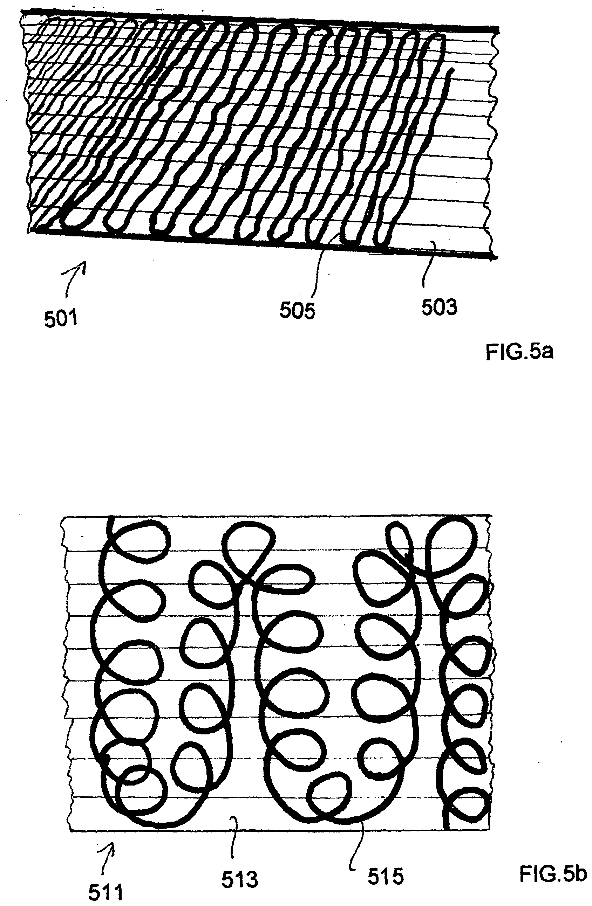

Der Aufbau in Figuren 4a,b unterscheidet sich von dem in Figur 2 dargestellten darin, dass die Sprüheinrichtung 307 senkrecht zur Transportrichtung des Laufbandes 305 hin und her bewegbar ist (angedeutet durch den Doppelpfeil). Dies erlaubt, das Bindemittelgespinst 313 als beispielsweise Linienmuster aufzutragen, wie auch in den Figuren 5a,b schematisch und exemplarisch dargestellt ist. Es können auch beliebige andere unzusammenhängende Auftragungsmuster gewählt werden.

Auf dem textilen Halbzeug 501 aus Figur 5a ist das Gespinst 505 in mäanderförmigem Linienmuster auf der Faserverstärkungsschicht 503 aufgetragen. Auf dem textilen Halbzeug 511 aus Figur 5b ist das Gespinst 515 unter Relativbewegung der Sprüheinrichtung auf parallel zur Transportrichtung des Laufbandes in spiralförmigem Linienmuster auf der Faserverstärkungsschicht 513 aufgetragen. Durch die Einstellung der Geschwindigkeit des Laufbandes und der Geschwindigkeit der Sprüheinrichtung lässt sich sehr gezielt Einfluss auf die Dichte des Gespinstes und dessen lokales Flächengewicht nehmen. Unter Einhaltung von mittleren Flächengewichten des Bindemittels von 3 g/m² bis 10 g/m², bevorzugt von 5 g/m² bis 7 g/m² lassen sich dabei dennoch überall hinreichende Bindemittelkonzentrationen erreichen, um auch komplexere Vorformlinge herstellen zu können. Insbesondere erlaubt der Auftrag in Linienmustern eine optimierte Bindungswirkung des Bindemittelgespinstes ohne das der Auftrag einer zusammenhängenden Fläche an Bindemittelgespinst notwendig wäre.

Die Belegung mit Bindemittelgespinst ist abhängig vom Fasermaterial, dem Umformungsgrad, der Struktur der Faserverstärkungsschichten und der erforderlichen Steifigkeit des Vorformlings. Betrachtet man das Beispiel aus zwei Glasfasergelegelagen mit Orientierungen von +45° und -45° mit dazwischen liegendem Bindemittelgespinst, bevorzugt auf Duroplastbasis, beispielsweise auf Bisphenol-A-Harz-Basis, aus dem ein L-Profil mit lokaler sphärischer Ausbuchtung herzustellen wäre, würde man den größten Teil mit ca. 5-7 g/m² Bindemittelgespinst belegen. Im Bereich der sphärischen Ausbuchtung würde man lokal die Bindemittelkonzentration auf etwa 10-12 g/m² erhöhen, um die Rückstellkräfte der Fasern der Faserverstärkungsschichten zu beherrschen. Über die gesamte Fläche des Glasfasergelege würde die Bindemittelkonzentration im Mittel unter 10 g/m² liegen.

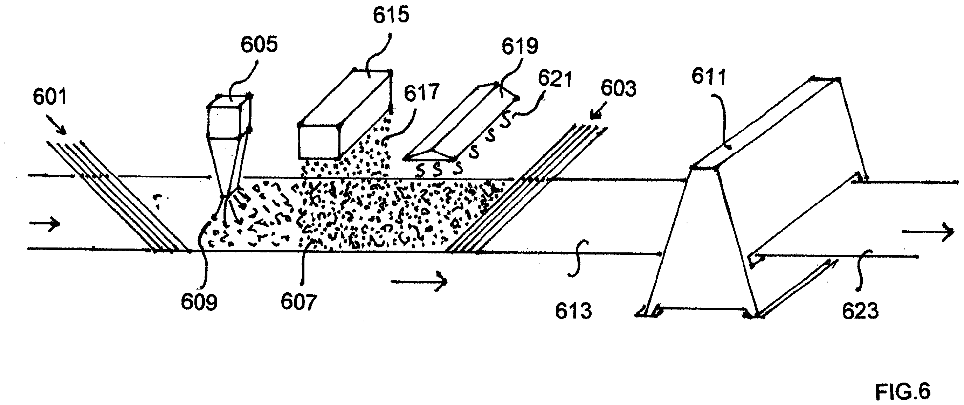

In Figur 6 ist eine weitere Variante des Aufbaus aus Figur 2 zur Herstellung eines textilen Halbzeuges als Vorstufe zum Vorformling dargestellt. Es ist ein erster Fadeneintrag 601 vorgesehen, der eine erste Glasfasergelegelage als Faserverstärkungsschicht bildet. Darauf wird unter Verwendung einer Sprüheinrichtung 605, aus der ein sich verwirbelnder Sprühstrahl 609 austritt, ein Bindemittelgespinst 607 gebildet. Darüber wird über einen zweiten Fadeneintrag 603 eine zweite Glasfasergelegelage als Faserverstärkungsschicht gebildet. Beide Gelegelagen sind unter +45° bzw. -45° zur durch den Pfeil angedeuteten Bearbeitungsrichtung angeordnet und bilden zusammen ein bidiagonales Gelege. Die Warenbahn 623 aus textilem Halbzeug aus mit Bindemittelgespinst auf Bisphenol-A-Harz-Basis ausgerüstetem bidiagonalen Gelege wird zur besseren Handhabbarkeit unter Verwendung der Näheinrichtung 611 genadelt.

Im Vergleich zum Aufbau aus Figur 2 weist der Aufbau aus Figur 6 zusätzlich eine Streueinrichtung 615 auf, um im vorliegenden Beispiel pulverförmige Zusatzstoffe 617 dem Bindemittelgespinst 607 beizugeben. Bei dem Pulver 617 aus Zusatzstoffen kann es sich beispielsweise um Zusatzstoffe handeln, die das Brand- bzw. Flammverhalten des Vorformlings und des daraus hergestellten Faserverbundbauteils beeinflussen. Auch mechanische Eigenschaften wie beispielsweise die Zähigkeit des Faserverbundbauteils kann durch die gezielte Zugabe von Zusatzstoffen nach Wunsch beeinflusst werden. Bei Bedarf kann das Zusatzstoffpulver 617 beispielsweise durch Ansintern mittels einer Heizeinrichtung 619 unter Einsatz von Wärmestrahlung 621 auf der Faserverstärkungsschicht bzw. im Bindemittelgespinst 607 fixiert werden, um ein zu starkes Ausrieseln zu verhindern. Je nach erreichter Temperatur kann dabei auch das Bindemittelgespinst eine höhere Anzahl von Kontaktstellen mit der darunter liegenden Faserverstärkungsschicht ausbilden.

Je nach Art und Zusammensetzung des Zusatzstoffes kann er auch dem Bindemittelmaterial zugegeben werden und mit diesem zusammen als Gespinst aufgesprüht werden. Der oder die Zusatzstoffe können auch in einem separaten Verfahrensschritt aufgesprüht werden. Insbesondere Zusatzstoffe, die die Zähigkeit des späteren Faserverbundbauteils erhöhen, auch Toughener genannt, eignen sich oft für einen Auftrag durch Sprühen.

### Bezugszeichen

- 101: erster Fadeneintrag
- 103: zweiter Fadeneintrag
- 105: Sprüheinrichtung
- 107: Gespinst
- 109: Sprühstrahl
- 111: Näheinrichtung
- 113: Warenbahn
- 201: textiles Halbzeug
- 203: Faserverstärkungsschicht
- 205: Faserverstärkungsschicht
- 207: Gespinstfaser
- 209: Gespinstfragment
- 211: Kontaktstelle
- 213: Faserverstärkungsschicht
- 301: erster Fadeneintrag
- 303: erste Faserverstärkungsschicht
- 305: Förderband
- 307: Sprüheinrichtung
- 309: Düse
- 311: Sprühstrahl
- 313: Gespinst
- 315: zweite Faserverstärkungsschicht
- 317: zweiter Fadeneintrag
- 319: Näheinrichtung
- 321: Warenbahn
- 323: Nähte
- 325: Warenrolle
- 501: textiles Halbzeug
- 503: Faserverstärkungsschicht
- 505: Gespinst
- 511: textiles Halbzeug
- 513: Faserverstärkungsschicht
- 515: Gespinst
- 601: erster Fadeneintrag
- 603: zweiter Fadeneintrag
- 605: Sprüheinrichtung
- 607: Gespinst
- 609: Sprühstrahl
- 611: Näheinrichtung
- 613: Warenbahn
- 615: Streueinrichtung
- 617: Pulver
- 619: Heizung
- 621: Wärmestrahlung
- 623: Warenbahn

- 10 - 16: Verfahrensschritte

## Patentansprüche

1. Verfahren zur Herstellung eines textilen Halbzeugs für einen Vorformling mit den Schritten:
- Bilden mindestens einer Faserverstärkungsschicht;
- Aufbringen von Bindemittel auf Basis langkettiger Reaktionsharze, die bei Raumtemperatur im festen Zustand vorliegen, durch Aufsprühen des Bindemittels als Gespinst.

2. Verfahren nach Anspruch 1, **dadurch gekennzeichnet, dass** das Bindemittelgespinst mit einem Flächengewicht im Bereich von 3 g/m² bis 10 g/m² aufgesprüht wird.

3. Verfahren nach einem der Ansprüche 1 oder 2, **dadurch gekennzeichnet, dass** beim Aufsprühen der Abstand zur Faserverstärkungsschicht derart gewählt wird, dass das Bindemittel beim Auftreffen auf der Faserverstärkungsschicht noch nicht vollständig erstarrt ist.

4. Verfahren nach einem der Ansprüche 1 bis 3, **dadurch gekennzeichnet, dass** ein Bindemittel mit Schmelzpunkt unter 125°C aufgesprüht wird.

5. Verfahren nach einem der Ansprüche 1 bis 4, **dadurch gekennzeichnet, dass** das Bindemittelgespinst als unzusammenhängendes Muster aufgesprüht wird.

6. Verfahren nach einem der Ansprüche 1 bis 5, **dadurch gekennzeichnet, dass** nach dem Aufbringen von Bindemittel darüber eine zweite Faserverstärkungsschicht angeordnet wird.

7. Verfahren zur Herstellung eines Vorformlings für ein Faserverbundbauteil, mit den Schritten:
- Herstellen eines textilen Halbzeugs nach dem Verfahren gemäß einem der Ansprüche 1 bis 6;
- Kaltumformen der mindestens einen mit Bindemittelgespinst versehenen Faserverstärkungsschicht;
- Erwärmen und anschließendes Abkühlen der umgeformten, mit Bindemittel versehenen Faserverstärkungsschicht.

8. Verfahren nach Anspruch 7, **dadurch gekennzeichnet, dass** das Erwärmen der umgeformten Faserverstärkungsschicht(en) mittels Heißluft und/oder Infrarotstrahlung und/oder Mikrowellenstrahlung durchgeführt wird.

9. Verfahren nach Anspruch 7 oder 8, **dadurch gekennzeichnet, dass** das Abkühlen mittels Kaltluft durchgeführt wird.

10. Textiles Halbzeug zur Herstellung eines Vorformlings für ein Faserverbundbauteil, das auf mindestens einer Faserverstärkungsschicht (503, 513) ein Gespinst (505, 515) aus einem Bindemittel auf Basis langkettiger Reaktionsharze, die bei Raumtemperatur im festen Zustand vorliegen, aufweist, **dadurch gekennzeichnet, dass** das Bindemittel als Gespinst (505, 515) auf die mindestens eine Faserverstärkungsschicht (503, 513) aufgesprüht ist.

11. Textiles Halbzeug nach Anspruch 10, **dadurch gekennzeichnet, dass** es Bindemittelgespinst (505, 515) mit einem Flächengewicht im Bereich von 3 g/m² bis 10 g/m² aufweist.

12. Textiles Halbzeug nach Anspruch 10 oder 11, **dadurch gekennzeichnet, dass** das Bindemittelgespinst (505,515) in einem unzusammenhängenden Muster aufgetragen ist.

## Claims

1. A method of manufacturing a semi-finished textile product for a preform, comprising the steps of:
- making at least one fibre reinforcement layer;
- applying a binder based on long-chain reaction resins present in a solid state at room temperature by spraying the binder on as a web.

2. The method according to claim 1, **characterised in that** the binder web is sprayed on with a weight per unit area in the range of 3g/m² to 10 g/m².

3. The method according to any one of claims 1 or 2, **characterised in that** during spraying the distance to the fibre reinforcement layer is chosen such that the binder is not fully solidified when it impinges on the fibre reinforcement layer.

4. The method according to any one of claims 1 to 3, **characterised in that** a binder having a melting point below 125°C is sprayed on.

5. The method according to any one of claims 1 to 4, **characterised in that** the binder web is sprayed on as an intermittent pattern.

6. The method according to any one of claims 1 to 5, **characterised in that**, after application of the binder, a second fibre reinforcement layer is arranged on top.

7. A method of manufacturing a preform for a fibre composite component, comprising the steps of:
- making a textile semi-finished product in accordance with the method according to any one of claims 1 to 6;
- cold forming the at least one fibre reinforcement layer provided with the binder web;
- heating and subsequent cooling of the formed fibre reinforcement layer provided with the binder.

8. The method according to claim 7, **characterised in that** the heating of the formed fibre reinforcement layer(s) is performed by means of hot air and/or infrared radiation and/or microwave radiation.

9. The method according to claim 7 or 8, **characterised in that** the cooling is performed by means of cold air.

10. A semi-finished textile product for making a preform for a composite fibre component, comprising, on at least one fibre reinforcement layer (503, 513), a web (505, 515) of a binder based on long-chain reaction resins present in a solid state at room temperature, **characterised in that** the binder is sprayed on as a web (505, 515) onto the at least one fibre reinforcement layer (503, 513).

11. The semi-finished textile product according to claim 10, **characterised in that** it comprises a binder web (505, 515) having a weight per unit area in the range of 3 g/m² to 10 g/m².

12. The semi-finished textile product according to claim 10 or 11, **characterised in that** the binder web (505, 515) is applied in an intermittent pattern.

## Revendications

1. Procédé de fabrication d'un produit textile semi-fini pour une préforme suivant les étapes:
- constitution d'au moins une couche de matériau de renforcement fibreux;
- application d'un liant à base de résines réactives à longue chaîne se trouvant en état solide à température ambiante, par pulvérisation du liant sous forme de filaments emmêlés.

2. Procédé selon la revendication 1, **caractérisé en ce que** le liant sous forme de filaments emmêlés est pulvérisé avec un poids surfacique compris entre 3g/m² et 10g/m².

3. Procédé selon la revendication 1 ou 2, **caractérisé en ce qu'**à l'application par pulvérisation la distance de la couche de matériau de renforcement fibreux est choisie de façon que le liant, en atteignant la couche de matériau de renforcement fibreux, n'est pas encore complètement figée.

4. Procédé selon l'une quelconque des revendications 1 à 3, **caractérisé en ce qu'**un liant ayant un point de fusion en-dessous de 125°C est pulvérisé.

5. Procédé selon l'une quelconque des revendications 1 à 4, **caractérisé en ce que** le liant sous forme de filaments emmêlés est appliqué par pulvérisation avec un motif discontinu.

6. Procédé selon l'une quelconque des revendications 1 à 5, **caractérisé en ce qu'**après l'application d'un liant une deuxième couche de matériau de renforcement fibreux est disposée en-dessus.

7. Procédé de fabrication d'une préforme pour un composant de matériau composite renforcé de fibres suivant les étapes:
- fabrication d'un produit textile semi-fini suivant le procédé selon l'une quelconque des revendications 1 à 6;
- déformation à froid de l'au moins une couche de matériau de renforcement fibreux pourvue de liant sous forme de filaments emmêlés;
- échauffement et refroidissement ultérieur de la couche déformée de matériau de renforcement fibreux pourvue de liant sous forme de filaments emmêlés.

8. Procédé selon la revendication 7, **caractérisé en ce que** l'échauffement de la/des couche(s) déformée(s) de matériau de renforcement fibreux est effectué au moyen d'air chaud et/ou de rayonnement infrarouge et/ou de rayonnement micro-ondes.

9. Procédé selon la revendication 7 ou 8, **caractérisé en ce que** le refroidissement est effectué au moyen d'air froid.

10. Produit textile semi-fini pour la fabrication d'une préforme pour un composant de matériau composite renforcé de fibres, qui présente sur au moins une couche de matériau de renforcement fibreux (503, 513) des filaments emmêlés (505, 515) d'un liant à base de résines réactives à longue chaîne qui se trouvent en état solide à température ambiante, **caractérisé en ce que** le liant est appliqué par pulvérisation sous forme de filaments emmêlés (505, 515) sur l'au moins une couche de matériau de renforcement fibreux (503, 513).

11. Produit textile semi-fini selon la revendication 10, **caractérisé en ce qu'**il comporte du liant sous forme de filaments emmêlés (505,515) avec un poids surfacique compris entre 3g/m² et 10g/m².

12. Produit textile semi-fini selon la revendication 10 ou 11, **caractérisé en ce que** le liant sous forme de filaments emmêlés (505,515) est appliqué avec un motif discontinu.
